# EUROPEAN PATENT SPECIFICATION

(11) **EP 4 400 332 B1**
(45) Date of publication and mention of the grant of the patent: **08.07.2026**
(21) Application number: 22867044.4
(22) Date of filing: 29.06.2022
(51) Int. Cl.: B60C 9/22, B60C 9/00, B60C 9/20

(54) **PNEUMATIC TIRE**
LUFTREIFEN
PNEU

(30) Priority: 07.09.2021 JP 2021145459
(43) Date of publication of application: 17.07.2024
(73) Proprietor: The Yokohama Rubber Co., Ltd., Hiratsuka-shi, Kanagawa 254-8601 (JP)
(72) Inventor: NAKAJIMA, Miyuki, Hiratsuka-shi, Kanagawa 254-8601 (JP); HARIKAE, Shinya, Hiratsuka-shi, Kanagawa 254-8601 (JP); FUJISHIRO, Masayuki, Hiratsuka-shi, Kanagawa 254-8601 (JP)
(74) Representative: Dilg, Haeusler, Schindelmann Patentanwaltsgesellschaft mbH
(86) International application number: PCT/JP2022/025933
(87) International publication number: WO 2023/037720

(56) References cited:
- JP-A- 2008 006 963
- JP-A- 2012 091 614
- JP-A- 2012 254 668
- JP-A- 2013 043 548
- JP-A- 2018 027 746
- JP-A- 2020 006 723
- JP-A- 2020 111 157
- JP-A- 2020 128 118
- JP-A- 2020 132 056

## Description

### Technical Field

The present invention relates to a pneumatic tire that includes a belt reinforcing layer formed of an organic fiber cord, and the pneumatic tire that allows providing improved durability of the tire and weight reduction and a reduction in rolling resistance of the tire in a compatible manner.

### Background Art

In a pneumatic tire, weight reduction and a reduction in rolling resistance of the tire are important objects from a viewpoint of reducing an environmental impact. To reduce rolling resistance, it has been proposed to constitute a belt cord forming a belt layer by monofilament wires (monofilament cord) (see, for example, Patent Literature 1). However, the belt layer formed of such monofilament wires has a problem that belt rigidity is reduced and belt breakage is likely to occur, thus decreasing durability of the tire.

For this, it is effective to suppress the decrease in the durability of the tire by disposing a belt reinforcing layer on an outer circumferential side of the belt layer. However, simply disposing the belt reinforcing layer results in an increase in the mass of the tire. Therefore, there is a demand for a countermeasure that provides weight reduction and a reduction in rolling resistance of the tire while the belt reinforcing layer is disposed to improve the durability of the tire in a compatible manner.

### Citation List

### Patent Literature

Patent Literature 1: JP 2002-29214 A

Further relevant prior art disclosing pneumatic tires comprising two belt layers disposed on an outer circumferential side of a carcass layer in the tread portion, wherein the belt layers being formed of belt cords that are monofilament wires are known from JP 2020 132056 A, JP 2018 027746 A and JP 2013 043548 A. Documents JP 2020 006723 A, JP 2012 091614 A and JP 2012 254668 A disclose tyres with belt layers and belt reinforcing layers disposed as mutually spaced strips on an outer circumferential side of the belt layers.

### Summary of Invention

### Technical Problem

An object of the present invention is to provide a pneumatic tire that includes a belt reinforcing layer formed of an organic fiber cord, and the pneumatic tire that allows providing improved durability of the tire and weight reduction and a reduction in rolling resistance of the tire in a compatible manner.

### Solution to Problem

A pneumatic tire according to the present invention for achieving the object is defined by the features of claim 1.

### Advantageous Effects of Invention

In an embodiment of the present invention, as described above, since the monofilament wires are used in the belt layer, a thickness of the belt layer can be thinned, and therefore a weight of the tire can be reduced and rolling resistance can be reduced. On the other hand, since the organic fiber cord formed of the highly rigid polyethylene terephthalate fiber (PET fiber) having an elongation under 2.0 cN/dtex load of from 2.0% to 4.0% is used in the belt reinforcing layer, the durability of the tire can be improved. Furthermore, the circumferential portions of the strip in which the belt reinforcing cords are arranged are disposed at intervals in the tire width direction. Accordingly, even when the belt reinforcing layer is disposed on the outer circumferential side of the belt layer, the tire weight can be reduced without excessively increasing the tire mass, and circumferential rigidity of the tire can be increased to reduce strain amplitude of the belt layer, thereby ensuring suppressing belt breakage.

In the pneumatic tire of an embodiment of the present invention, a ratio of a mutual interval of the strip to a width of the strip constituting the belt reinforcing layer is from 0.05 to 1.50, and the width of the strip is from 5 mm to 15 mm. Setting the ratio of the mutual interval of the strip to the width of the strip constituting the belt reinforcing layer in the range allows sufficiently obtaining an effect of suppressing belt breakage while the weight of the tire is reduced. Further, setting the width of the strip in the range allows improving uniformity of the tire without reducing productivity.

A strength of the belt cord constituting the belt layer is preferably from 3500 MPa to 4000 MPa. Thus, belt breakage can be suppressed and the durability of the tire can be improved effectively.

The belt layer is preferably constituted by arranging a plurality of the belt cords. Thus, belt breakage can be suppressed and the durability of the tire can be improved effectively.

The belt reinforcing layer preferably includes a full cover layer completely covering the belt layers and a pair of edge cover layers locally covering both end portions of the belt layers. A width of the strip constituting the belt reinforcing layer is preferably from 8 mm to 12 mm. Thus, belt breakage can be suppressed and the durability of the tire can be improved effectively.

### Brief Description of Drawings

FIG. 1 is a meridian cross-sectional view illustrating a pneumatic radial tire according to an embodiment of the present invention.
FIG. 2 is an explanatory diagram schematically illustrating a disposition of a belt layer (monofilament wires).
FIG. 3 is a cross-sectional view illustrating an example of a specific structure of a belt reinforcing layer.
FIG. 4 is a cross-sectional view illustrating a modified example of a specific structure of a belt reinforcing layer.

### Description of Embodiments

Configurations of embodiments of the present invention will be described in detail below with reference to the accompanying drawings.

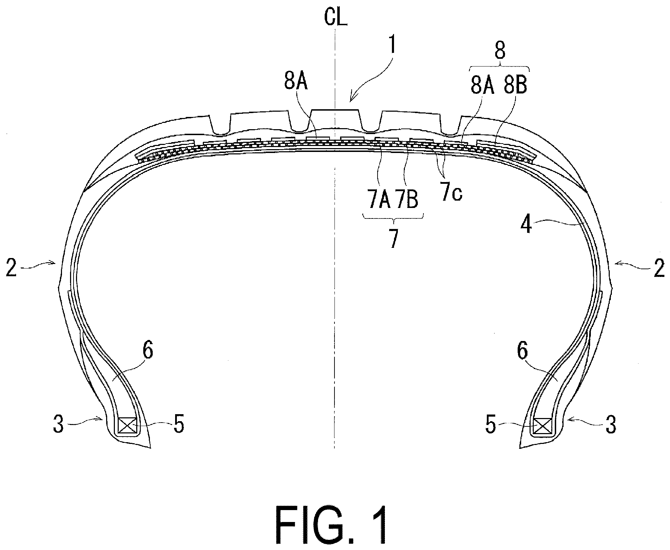

As illustrated in FIG. 1, a pneumatic tire according to an embodiment of the present invention includes a tread portion 1, a pair of sidewall portions 2 respectively disposed on both sides of the tread portion 1, and a pair of bead portions 3 each disposed on an inner side of the pair of sidewall portions 2 in a tire radial direction. "CL" in FIG. 1 denotes a tire equator. Although not illustrated in FIG. 1, which is a meridian cross-sectional view, the tread portion 1, the sidewall portions 2, and the bead portions 3 each extend in a tire circumferential direction and have an annular shape. This forms a toroidal basic structure of the pneumatic tire. Although the description using FIG. 1 is basically based on the illustrated meridian cross-sectional shape, all of the tire components extend in the tire circumferential direction and form the annular shape.

In the illustrated example, a plurality of main grooves (four main grooves in the illustrated example) extending in the tire circumferential direction is formed in the outer surface of the tread portion 1; however, the number of main grooves is not limited. In addition to the main grooves, various grooves and sipes that include lug grooves extending in a tire width direction can also be formed.

At least one layer (one layer in the illustrated example) of a carcass layer 4 including a plurality of reinforcing cords extending in the tire radial direction is mounted between the pair of left and right bead portions 3. A bead core 5 is embedded within each of the bead portions 3, and a bead filler 6 having an approximately triangular cross-sectional shape is disposed on an outer periphery of the bead core 5. The carcass layer 4 is folded back around the bead core 5 from an inner side to an outer side in the tire width direction. Accordingly, the bead core 5 and the bead filler 6 are wrapped by a body portion (a portion extending from the tread portion 1 through each of the sidewall portions 2 to each of the bead portions 3) and a folded back portion (a portion folded back around the bead core 5 of each bead portion 3 to extend toward each sidewall portion 2 side) of the carcass layer 4.

On the other hand, two layers of belt layers 7 are embedded on the outer circumferential side of the carcass layer 4 in the tread portion 1. That is, the belt layer 7 includes an inner belt layer 7A positioned to the inside in the tire radial direction and an outer belt layer 7B positioned to the outside in the tire radial direction. Each of the belt layers 7 includes a plurality of belt cords 7c inclined with respect to the tire circumferential direction, with the belt cords 7c being disposed so as to intersect with one another between the layers. In the belt layers 7, an inclination angle of the belt cord 7c with respect to the tire circumferential direction is, for example, set to range from 10° to 40°.

A belt reinforcing layer 8 is provided on an outer circumferential side of the belt layer 7 for the purpose of improving high-speed durability and reducing road noise. The belt reinforcing layer 8 includes a belt reinforcing cord oriented in the tire circumferential direction. In the belt reinforcing layer 8, an angle of the belt reinforcing cord with respect to the tire circumferential direction is set within, for example, from 0° to 5°. In an embodiment of the present invention, the belt reinforcing layer 8 necessarily includes a full cover layer 8A that completely covers the belt layers 7, and can discretionarily include a pair of edge cover layers 8B that locally cover both end portions of the belt layers 7 (in the illustrated example, both the full cover layer 8A and the edge cover layers 8B are included). The belt reinforcing layer 8 is configured by spirally winding a strip made of at least a single belt reinforcing cord arranged and covered with coating rubber in the tire circumferential direction. This strip is configured of the belt reinforcing cord and the coating rubber. Particularly, the belt reinforcing layer 8 desirably has a jointless structure.

Since an embodiment of the present invention relates to the belt cord constituting the belt layer 7 and the belt reinforcing cord constituting the belt reinforcing layer 8 described above, the basic overall structure of the tire is not limited to that described above.

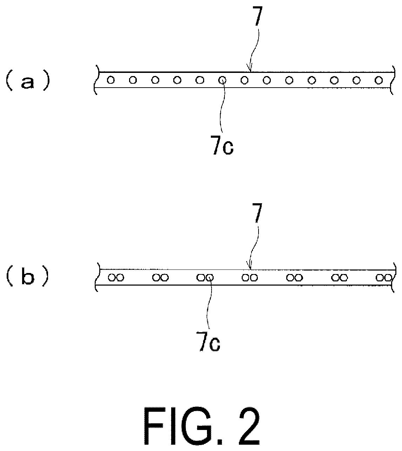

As illustrated in FIGS. 2(a) and 2(b), in an embodiment of the present invention, the belt cord 7c constituting the belt layer 7 is not a twisted cord formed by twisting a plurality of wire strands together but is made of a steel monofilament wire. A wire diameter of the monofilament wire is 0.30 mm or more, and preferably 0.32 mm or more. Accordingly, the use of the monofilament wire for the belt layer 7 allows suppressing elongation of the belt cord 7c and allows making the belt layer 7 thinner, and thus heat build-up can be suppressed even at extremely high speeds, such as circuit running. Note that from a perspective of making the belt layer 7 thinner, the wire diameter of the monofilament wire is 0.45 mm or less, and preferably 0.40 mm or less.

To configure the belt layer 7 with the monofilament wires, as illustrated in FIG. 2(a), although the monofilament wires may be arrayed at intervals one by one, as illustrated in FIG. 2(b), a plurality of the monofilament wires (two in the drawing) are preferably arranged and arrayed at intervals by a plurality of the arranged monofilament wires. When the belt layer 7 illustrated in FIG. 2(b) is provided, belt breakage can be suppressed, which is suitable for improving the durability of the tire. In the latter case, an interval between the monofilament wires (an interval between the plurality of the monofilament wires that are bunched with each other) is preferably set within, for example, from 0.30 mm to 1.80 mm.

The specific structure of the monofilament wire is not particularly limited as long as the monofilament wire satisfies the wire diameter described above. Various types of monofilament wires that can be used in pneumatic tires can be adopted, including a monofilament wire that is twisted around a wire axis (twisted monofilament), a monofilament wire having a flat cross-sectional shape (flat monofilament), a monofilament wire formed in a helical shape (spiral monofilament), and a monofilament wire formed in a wavy planar shape (2-dimensional wavy monofilament).

When a product of a unit mass (g/m) of the monofilament wire and a wire count of the monofilament wires per 50 mm width (wires/50 mm) in a direction orthogonal to a longitudinal direction of the monofilament wire is defined as an amount of wire, the amount of wire is within a range of from 50 to 280. Such a favorable structure of the belt layer 7 is advantageous in improving steering stability while maintaining durability. When the amount of wire is less than 50, a proportion of the monofilament wires in the belt layer 7 is so small that steering stability may decline. When the amount of wire exceeds 280, belt-edge-separation possibly occurs.

In an embodiment of the present invention, a polyester fiber cord having an elongation under 2.0 cN/dtex load of from 2.0% to 4.0%, or preferably from 2.6% to 3.4%, is used as the belt reinforcing cord forming the belt reinforcing layer 8. Examples of the polyester fiber can include a polyethylene terephthalate fiber (PET fiber). Note that in an embodiment of the present invention, the elongation under 2.0 cN/dtex load is an elongation ratio (%) of a sample cord, which is measured under 2.0 cN/dtex load by conducting a tensile test in accordance with JIS-L1017 "Test methods for chemical fiber tire cords" and under the conditions that a length of specimen between grips is 250 mm and a tensile speed is 300 ± 20 mm/minute.

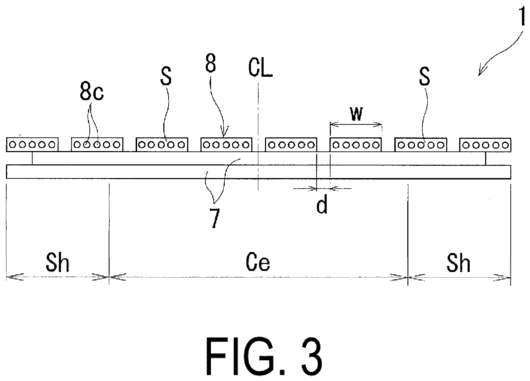

As illustrated in FIG. 3, in the pneumatic tire, belt reinforcing cords 8c constituting the belt reinforcing layer 8 are arranged to form a strip S, and circumferential portions of the strip S are disposed at intervals in the tire width direction. That is, when the strip S is wound along the tire circumferential direction, the circumferential portions are separated from one another. In an embodiment of the present invention, thus, the circumferential portions of the strip S constituting the belt reinforcing layer 8 are disposed so as not to be in close contact in the tire width direction.

In the above-described pneumatic tire, since the monofilament wires are used in the belt layer 7, a thickness of the belt layer 7 can be thinned, and therefore a weight of the tire can be reduced and rolling resistance can be reduced. On the other hand, since the organic fiber cord formed of the highly rigid polyethylene terephthalate fiber (PET fiber) having an elongation under 2.0 cN/dtex load of from 2.0% to 4.0% is used in the belt reinforcing layer 8, the durability of the tire can be improved. Furthermore, the circumferential portions of the strip S in which the belt reinforcing cords 8c are arranged are disposed at intervals in the tire width direction. Accordingly, even when the belt reinforcing layer 8 is disposed on the outer circumferential side of the belt layer 7, the tire weight can be reduced without excessively increasing the tire mass, and circumferential rigidity of the tire can be increased to reduce strain amplitude of the belt layer 7, thereby ensuring suppressing belt breakage.

Further, the belt layer 7 formed of the monofilament wires of the particular wire diameter and the belt reinforcing layer 8 formed of the organic fiber cords having specific physical properties are used in combination to ensure improving steering stability under normal travel conditions and during circuit running. That is, in the belt reinforcing layer 8, the polyethylene terephthalate fiber (PET fiber) having the physical properties described above including high rigidity can be used to improve steering stability under normal travel conditions. Additionally, the belt reinforcing layer 8 effectively suppresses the rising of the belt end portion at high speeds, and thus, can improve high-speed durability. On the other hand, the use of the monofilament wire described above for the belt layer 7 allows suppressing elongation of the belt cord and making the belt layer 7 thinner, and thus heat build-up can be suppressed even at extremely high speeds, such as circuit running. Accordingly, a reduction in the elastic modulus (rigidity) of the belt reinforcing layer 8 (PET fiber cord) can be prevented, and steering stability at extremely high speeds can be favorably ensured.

Here, in a configuration in which the twisted cord is used, instead of the monofilament wire, as the belt cord that forms the belt layer 7, elongation can be caused in the belt cord by the twisted structure, and the belt layer 7 cannot be made thinner, and thus, the effects described above cannot be obtained. When the wire diameter of the monofilament wire is less than 0.30 mm, the monofilament wire is too thin to ensure the sufficient durability of the wire itself, casing belt breakage. When the wire diameter of the monofilament wire exceeds 0.45 mm, the belt layer 7 cannot be made sufficiently thinner than when using a conventional twisted cord. This increases the tire mass and also tends to deteriorate tire durability. When the elongation under 2.0 cN/dtex load of the organic fiber cord constituting the belt reinforcing layer 8 is less than 2.0%, since rigidity is so high, shear stress increases between the belt layer 7 and the belt reinforcing layer 8 to reduce the durability against separation. When the elongation under 2.0 cN/dtex load of the organic fiber cord forming the belt reinforcing layer 8 exceeds 4.0%, the rigidity of the belt reinforcing layer 8 is too low to obtain good steering stability.

In the pneumatic tire, a ratio d/w of a mutual interval d (see FIG. 3) of the strip to a width w (see FIG. 3) of the strip S constituting the belt reinforcing layer 8 is from 0.05 to 1.50. Further, the width w of the strip S is from 5 mm to 15 mm and preferably from 8 mm to 12 mm. The width w of the strip S is a width including the belt reinforcing cords 8c and the coating rubber. Thus, setting the ratio d/w in the range allows sufficiently obtaining an effect of suppressing belt breakage while the weight of the tire is reduced. Further, setting the width w of the strip S in the range allows improving uniformity of the tire without reducing productivity. Note that the preferable range of the ratio d/w described above is applied to the strip S included in a region in which the circumferential portions of the strip S are disposed at intervals in the tire width direction, and is not applied to the strip S included in a region in which the circumferential portions of the strip S are disposed so as to be in close contact with one another without an interval in the tire width direction.

Here, with the ratio d/w of less than 0.05, the weight of the tire cannot be reduced, and on the other hand, with the ratio d/w of more than 1.50, the circumferential rigidity of the tire cannot be sufficiently ensured and belt breakage cannot be sufficiently suppressed. Further, the width w of the strip S of less than 5 mm deteriorates the producibility of the tire, whereas the width w of the strip S in excess of 15 mm deteriorates the uniformity of the tire.

In particular, the belt reinforcing layer 8 preferably includes the full cover layer 8A completely covering the belt layers 7 and the pair of edge cover layers 8B locally covering both end portions of the belt layers 7, and the width w of the strip S constituting the belt reinforcing layer 8 is preferably from 8 mm to 12 mm. By configuring the belt reinforcing layer 8 as described above, belt breakage can be suppressed and the durability of the tire can be improved effectively.

A strength of the belt cord 7c constituting the belt layer 7 is preferably from 3500 MPa to 4000 MPa. By setting the strength of the belt cord 7c as appropriate as described above, belt breakage can be suppressed and the durability of the tire can be improved effectively.

In order to obtain the belt reinforcing cord (PET fiber cord) having the physical properties described above, dip processing may be optimized, for example. In other words, before a calendar process, dip processing with an adhesive is performed on the belt reinforcing cord (PET fiber cord); however, preferably, in a normalizing process after a two-bath treatment, an ambient temperature is set within a range of from 210°C to 250°C and a cord tension is set within a range of 2.2×10-² N/tex to 6.7×10-² N/tex. Accordingly, the desired physical properties as described above can be imparted to the belt reinforcing cord (PET fiber cord). When the cord tension in the normalizing process is smaller than 2.2×10-² N/tex, cord elastic modulus decreases, and steering stability declines. In contrast, when the cord tension is greater than 6.7×10-² N/tex, cord elastic modulus increases, and thus separation is likely to happen.

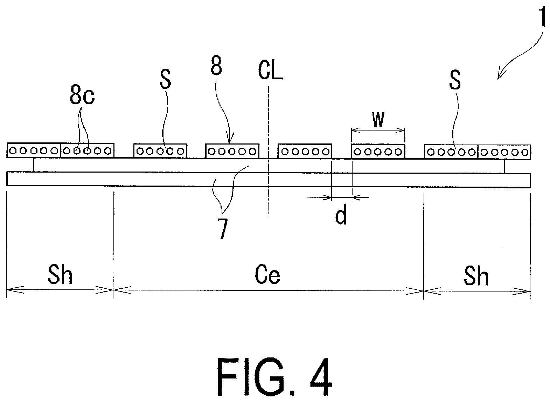

The embodiment of FIG. 3 describes an example in which the circumferential portions of the strip S are disposed at intervals in the tire width direction over the entire region (a center region Ce and shoulder regions Sh) of the tread portion 1 but is not limited to the example. In addition, as illustrated in FIG. 4, while the circumferential portions of the strip S are disposed at intervals in the tire width direction in the center region Ce of the tread portion 1, the circumferential portions of the strip S can be disposed in close contact with one another without an interval in the tire width direction in the shoulder regions Sh. In this case, the width of the shoulder region Sh on one side is preferably set to 10 mm to 30 mm. Alternatively, while the circumferential portions of the strip S are disposed at intervals in the tire width direction, the circumferential portions can be disposed to be positioned on the lower portions of the main grooves formed in the tread portion 1.

### Examples

Pneumatic tires of Comparative Examples 1 to 6 and Examples 1 to 7 having a tire size of 195/65R15 and including a tread portion extending in a tire circumferential direction and having an annular shape, a pair of sidewall portions disposed on both sides of the tread portion, a pair of bead portions disposed on an inner side of the sidewall portions in a tire radial direction, a carcass layer mounted between the pair of bead portions, two layers of belt layers disposed on an outer circumferential side of the carcass layer in the tread portion, and a belt reinforcing layer including an organic fiber cord as a belt reinforcing cord and disposed on an outer circumferential side of the belt layers were manufactured. In the tires, a structure of the belt cord constituting the belt layer, a wire diameter (cord diameter), a strength of the belt cord, the type of the organic fiber used for the organic fiber cord constituting the belt reinforcing layer, an elongation under 2.0 cN/dtex load of the organic fiber cord, presence or absence of an interval of a strip, a ratio of a mutual interval to the width of the strip, and the width w of the strip were set as in Table 1.

In Comparative Examples 1 to 5 and Examples 1 to 7, the belt reinforcing layer has a jointless structure in which the strip formed by arranging a plurality of polyethylene terephthalate (PET) fiber cords and covering them with a coating rubber is spirally wound in the tire circumferential direction. Meanwhile, in Comparative Example 6, the belt reinforcing layer has a jointless structure in which a strip formed by arranging a plurality of polyethylene naphthalate (PEN) fiber cords and covering them with a coating rubber is spirally wound in the tire circumferential direction. Table 1 indicates the case of the PET fiber cord as "PET" and the case of the PEN fiber cord as "PEN" in the columns of the "Type of organic fiber." The cord density in the strip is 50 cords/50 mm. Further, the PET fiber cord has a structure of 1100 dtex/2. In all examples, one layer of a full cover layer completely covering the belt layers and two layers of edge cover layers covering only both end portions of the belt layers were provided as the belt reinforcing layer. In Comparative Example 1, the circumferential portions of the strip of the belt reinforcing layer were disposed so as to be in close contact with one another without an interval in the tire width direction. In Comparative Examples 2 to 6 and Examples 1 to 7, the circumferential portions of the strip of the belt reinforcing layer were disposed at intervals in the tire width direction.

The test tires were evaluated, according to the following evaluation method, for weight reduction, steering stability during circuit running, and tire durability, and the results are also illustrated in Table 1.

### Weight Reduction:

The mass of each test tire was measured. Evaluation results are expressed as index values with Comparative Example 1 being assigned an index value of 100. Smaller index values mean lighter weights.

### Steering Stability (During Circuit Running):

Each of the test tires was assembled on a wheel having a rim size of 15×6J, mounted on a test vehicle (engine displacement 2000 cc), and an air pressure was set to 230 kPa. Sensory evaluation was performed by five test drivers on a test course with a paved road for steering stability under a conditions of a speed of from 100 km/h to 270 km/h. The respective evaluation results were scored by a 5-point method with Conventional Example 1 being assigned as 3 points (reference), and the average value of the scores of the five test drivers was indicated. Larger values indicate superior steering stability.

### Tire Durability:

Each of the test tires was mounted on a wheel having a rim size of 15×6J and inflated with oxygen to an internal pressure of 230 kPa. The tires were held for two weeks in a chamber maintained at a chamber temperature of 60°C, and **then oxygen** inside the chamber was released, and the chamber was filled with air to an internal pressure of 160 kPa. A drum testing machine having a smooth drum surface made of steel and having a diameter of 1707 mm was used to run the pre-treated test tires for 300 km for 10 hours under fluctuating conditions including an ambient temperature of 38 ± 3°C, a running speed of 30 km/hr, a slip angle of 0 ± 5°, and a maximum load of 70 ± 40%, with the load and the slip angle fluctuated by a rectangular wave of 0.083 Hz. After the running, the tires were cut to open, and the number of portions of belt breakage, the number of belts where belt breakage occurred, and a separation length in a width direction at an end portion in a belt width direction were measured. The evaluation results are expressed as index values with Comparative Example 1 being assigned the value of 100 by using reciprocals of the measurement values. Larger index values mean more excellent durability against belt breakage and belt-edge-separation.

**Table 1-1**

| | | | Comparative Example 1 | Comparativ e Example 2 | Comparative Example 3 | Comparative Example 4 | Comparative Example 5 | Comparative Example 6 |
|---|---|---|---|---|---|---|---|---|
| Belt layer | Belt cord structure | | Monofilament wire | Monofilament wire | Monofilament wire | Monofilament wire | Monofilament wire | Monofilament wire |
| | Wire diameter (cord diameter) | mm | 0.32 | 0.32 | 0.25 | 0.50 | 0.32 | 0.32 |
| | Strength of belt cord | MPa | 3300 | 3300 | 3300 | 3300 | 3300 | 3300 |
| Belt reinforcing layer | Type of organic fiber | | PET | PET | PET | PET | PET | PEN |
| | Elongation under 2.0 cN/dtex load | % | 4.4 | 4.4 | 2.7 | 2.7 | 1.5 | 1.3 |
| | Presence of interval of strip | | No | Yes | Yes | Yes | Yes | Yes |
| | Ratio of mutual interval to width of strip d/w | | 0 | 1.7 | 1.7 | 1.7 | 1.7 | 1.7 |
| | Width w of strip | mm | 20 | 20 | 20 | 20 | 20 | 20 |
| Weight reduction | | Index value | 100 | 93 | 90 | 110 | 93 | 93 |
| Steering stability (during circuit running) | | | 3.0 | 3.0 | 3.8 | 3.8 | 3.9 | 4.0 |
| Tire durability | | Index value | 100 | 95 | 90 | 96 | 96 | 85 |

**Table 1-2**

| | | | Example 1 | Example 2 | Example 3 | Example 4 | Example 5 | Example 6 | Example 7 |
|---|---|---|---|---|---|---|---|---|---|
| Belt layer | Belt cord structure | | Monofilament wire | Monofilament wire | Monofilament wire | Monofilament wire | Monofilament wire | Monofilament wire | Monofilament wire |
| | Wire diameter (cord diameter) | mm | 0.32 | 0.32 | 0.32 | 0.32 | 0.32 | 0.32 | 0.32 |
| | Strength of belt cord | MPa | 3300 | 3300 | 3300 | 3600 | 3600 | 3600 | 3600 |
| Belt reinforcing layer | Type of organic fiber | | PET | PET | PET | PET | PET | PET | PET |
| | Elongation under 2.0 cN/dtex load | % | 2.7 | 2.7 | 2.7 | 2.7 | 2.7 | 2.7 | 2.7 |
| | Presence of interval of strip | | Yes | Yes | Yes | Yes | Yes | Yes | Yes |
| | Ratio of mutual interval to width of strip d/w | | 1.7 | 0.2 | 1.1 | 1.1 | 1.1 | 1.1 | 1.1 |
| | Width w of strip | mm | 20 | 15 | 15 | 15 | 10 | 8 | 12 |
| Weight reduction | | Index value | 93 | 98 | 95 | 95 | 94 | 94 | 94 |
| Steering stability (during circuit running) | | | 3.8 | 4.0 | 3.9 | 3.9 | 3.9 | 3.9 | 3.9 |
| Tire durability | | Index value | 110 | 117 | 115 | 120 | 125 | 127 | 123 |

As can be seen from Table 1, the tires of Examples 1 to 7 were able to improve the tire durability while the weights of the tires were reduced compared with Comparative Example 1 as the reference. In addition, the tires of Examples 1 to 7 were able to improve steering stability during circuit running compared with Comparative Example 1 as a reference.

On the other hand, in Comparative Example 2, since the elongation under 2.0 cN/dtex load was large and the rigidity of the belt reinforcing layer was too low, belt breakage occurred, the tire durability was reduced, and the steering stability during circuit running was reduced. In Comparative Example 3, the wire diameter of the belt cord was too thin, and therefore belt breakage occurred and the tire durability was reduced. In Comparative Example 4, the wire diameter of the belt cord was too thick, and therefore the tire mass was increased. Additionally, separation occurred between layers of an inner belt layer and an outer belt layer and the tire durability was reduced. In Comparative Example 5, since the elongation under 2.0 cN/dtex load was small and the rigidity of the belt reinforcing layer was too high, separation occurred between the belt layer and the belt reinforcing layer, and the tire durability was reduced. In Comparative Example 6, the belt reinforcing layer was made of the PEN fiber cords, the elongation of the PEN fiber cords under 2.0 cN/dtex load was small, and the rigidity of the belt reinforcing layer was too high. Therefore, separation occurred between the belt layer and the belt reinforcing layer, and the tire durability was reduced.

### Reference Signs List

1 Tread portion
2 Sidewall portion
3 Bead portion
4 Carcass layer
5 Bead core
6 Bead filler
7 Belt layer
7A Inner belt layer
7B Outer belt layer
7c Belt cord
8 Belt reinforcing layer
8c Belt reinforcing cord
CL Tire equator
S Strip

## Claims

1. A pneumatic tire, comprising:
a tread portion (1) extending in a tire circumferential direction and having an annular shape;
a pair of sidewall portions (2) respectively disposed on both sides of the tread portion (1);
a pair of bead portions (3) each disposed on an inner side of the pair of sidewall portions (2) in a tire radial direction;
a carcass layer (4) mounted between the pair of bead portions (3);
two layers of belt layers (7) disposed on an outer circumferential side of the carcass layer (4) in the tread portion (1); and
a belt reinforcing layer (8) disposed on an outer circumferential side of the belt layers (7) and comprising at least one belt reinforcing cord (8c) spirally wound along a tire circumferential direction;
belt cords (7c) constituting the belt layers (7) being monofilament wires having a wire diameter of 0.30 mm or more and 0.45 mm or less,
an amount of wire defined as a product of a unit mass in g/m of the monofilament wire and a wire count of the monofilament wires per 50 mm width in a direction orthogonal to a longitudinal direction of the monofilament wires being within a range of from 50 to 280,
the belt reinforcing cord (8c) constituting the belt reinforcing layer (8) being an organic fiber cord made of a polyethylene terephthalate fiber, the belt reinforcing cord (8c) having an intermediate elongation under 2.0 cN/dtex load of from 2.0% to 4.0%,
**characterized by**
the belt reinforcing cords (8c) being arranged to form a strip (S), and circumferential portions of the strip (S) being disposed at intervals (d) in a tire width direction, and wherein
a ratio of a mutual interval (d) of the strip (S) to a width (w) of the strip (S) constituting the belt reinforcing layer (8) is from 0.05 to 1.50, and
the width of the strip (S) is from 5 mm to 15 mm.

2. The pneumatic tire according to claim 1, wherein a strength of the belt cord (7c) constituting the belt layer (7) is from 3500 MPa to 4000 MPa.

3. The pneumatic tire according to claim 1 or 2, wherein the belt layer (7) is constituted by arranging a plurality of the belt cords (7c).

4. The pneumatic tire according to any of claims 1 to 3, wherein
the belt reinforcing layer (8) comprises a full cover layer (8A) completely covering the belt layers (7) and a pair of edge cover layers (8B) locally covering both end portions of the belt layers (7), and
a width (w) of the strip (S) constituting the belt reinforcing layer (8) is from 8 mm to 12 mm.

## Patentansprüche

1. Luftreifen, umfassend:
einen Laufflächenabschnitt (1), der sich in einer Reifenumfangsrichtung erstreckt und eine Ringform aufweist;
ein Paar von Seitenwandabschnitten (2), die jeweils auf beiden Seiten des Laufflächenabschnitts (1) angeordnet sind;
ein Paar von Wulstabschnitten (3), die jeweils auf einer Innenseite des Paars von Seitenwandabschnitten (2) in Reifenradialrichtung angeordnet sind;
eine Karkassenschicht (4), die zwischen dem Paar von Wulstabschnitten (3) angebracht ist;
zwei Schichten von Gürtelschichten (7), die auf einer Außenumfangsseite der Karkassenschicht (4) in dem Laufflächenabschnitt (1) angeordnet sind; und
eine Gürtelverstärkungsschicht (8), die auf einer Außenumfangsseite der Gürtelschichten (7) angeordnet ist und umfassend mindestens einen gürtelverstärkenden Cord (8c), der entlang einer Reifenumfangsrichtung spiralförmig gewickelt ist;
Gürtelcordfäden (7c), die die Gürtelschichten (7) bilden, die Monofilamentdrähte sind, die einen Drahtdurchmesser von 0,30 mm oder mehr und 0,45 mm oder weniger aufweisen,
eine Menge von Draht, die als ein Produkt einer Einheitsmasse in g/m des Monofilamentdrahts und einer Drahtzahl der Monofilamentdrähte pro 50 mm Breite in einer Richtung, die senkrecht zu einer Längsrichtung der Monofilamentdrähte ist, definiert ist, die innerhalb eines Bereichs von 50 bis 280 liegt,
den gürtelverstärkenden Cord (8c), der die Gürtelverstärkungsschicht (8) bildet, der ein organischer Fasercordfaden ist, der aus einer Polyethylenterephthalatfaser hergestellt ist, wobei der gürtelverstärkende Cord (8c) eine Zwischenverlängerung unter 2,0 cN/dtex Last von 2,0 % bis 4,0 % aufweist,
**dadurch gekennzeichnet, dass**
die gürtelverstärkenden Cords (8c) eingerichtet sind, um einen Streifen (S) auszubilden, und Umfangsabschnitte des Streifens (S) in Intervallen (d) in Reifenbreitenrichtung angeordnet sind und wobei
ein Verhältnis eines wechselseitigen Intervalls (d) des Streifens (S) zu einer Breite (w) des Streifens (S), der die Gürtelverstärkungsschicht (8) bildet, von 0,05 bis 1,50 beträgt und
die Breite des Streifens (S) von 5 mm bis 15 mm beträgt.

2. Luftreifen nach Anspruch 1, wobei eine Festigkeit des Gürtelcordfadens (7c), der die Gürtelschicht (7) bildet, von 3500 MPa bis 4000 MPa beträgt.

3. Luftreifen nach Anspruch 1 oder 2, wobei die Gürtelschicht (7) durch das Einrichten einer Mehrzahl der Gürtelcordfäden (7c) gebildet ist.

4. Luftreifen nach einem der Ansprüche 1 bis 3, wobei
die Gürtelverstärkungsschicht (8) eine Vollabdeckungsschicht (8A), die die Gürtelschichten (7) völlig abdeckt, und ein Paar von Randabdeckungsschichten (8B), die beide Endabschnitte der Gürtelschichten (7) lokal abdecken, umfasst und
eine Breite (w) des Streifens (S), der die Gürtelverstärkungsschicht (8) bildet, 8 mm bis 12 mm beträgt.

## Revendications

1. Pneumatique, comprenant :
une partie de bande de roulement (1) s'étendant dans une direction circonférentielle de pneu et ayant une forme annulaire ;
une paire de parties de flanc (2) disposées respectivement de part et d'autre de la partie de bande de roulement (1) ;
une paire de parties de talon (3) disposées chacune sur un côté interne de la paire de parties de flanc (2) dans une direction radiale de pneu ;
une couche de carcasse (4) montée entre la paire de parties de talon (3) ;
deux couches de couches de courroie (7) disposées sur un côté circonférentiel externe de la couche de carcasse (4) dans la partie de bande de roulement (1) ; et
une couche de renforcement de courroie (8) disposée sur un côté circonférentiel externe des couches de courroie (7) et comprenant au moins un câble de renforcement de courroie (8c) enroulé en spirale le long d'une direction circonférentielle de pneu ;
des cordons de courroie (7c) constituant les couches de courroie (7) étant des fils monofilament ayant un diamètre de fil de 0,30 mm ou plus et de 0,45 mm ou moins,
une quantité de fil définie comme un produit d'une masse unitaire en g/m du fil monofilament et d'un nombre de fils des fils monofilament pour 50 mm de largeur dans une direction orthogonale à une direction longitudinale des fils monofilament étant comprise dans une plage allant de 50 à 280,
le câble de renforcement de courroie (8c) constituant la couche de renforcement de courroie (8) étant un câble de fibres organiques constitué d'une fibre de polyéthylène téréphtalate, le câble de renforcement de courroie (8c) ayant un allongement intermédiaire sous une charge de 2,0 cN/dtex allant de 2,0 % à 4,0 %,
**caractérisé en ce que**
les câbles de renforcement de courroie (8c) étant agencés pour former une bande (S), et des parties circonférentielles de la bande (S) étant disposées à des intervalles (d) dans une direction de largeur de pneu, et dans lequel
un rapport d'un intervalle mutuel (d) de la bande (S) à une largeur (w) de la bande (S) constituant la couche de renforcement de courroie (8) va de 0,05 à 1,50, et
la largeur de la bande (S) va de 5 mm à 15 mm.

2. Pneumatique selon la revendication 1, dans lequel une résistance du câble de courroie (7c) constituant la couche de courroie (7) va de 3500 MPa à 4000 MPa.

3. Pneumatique selon la revendication 1 ou 2, dans lequel la couche de courroie (7) est constituée par l'agencement d'une pluralité de câbles de courroie (7c).

4. Pneumatique selon l'une quelconque des revendications 1 à 3, dans lequel
la couche de renforcement de courroie (8) comprend une couche de couverture complète (8A) couvrant complètement les couches de courroie (7) et une paire de couches de couverture de bord (8B) couvrant localement l'une et l'autre des parties d'extrémité des couches de courroie (7), et
une largeur (w) de la bande (S) constituant la couche de renfort de courroie (8) va de 8 mm à 12 mm.
